# EUROPEAN PATENT APPLICATION

(11) **EP 4 580 269 A1**
(43) Date of publication of application: **02.07.2025**
(21) Application number: 23872874.5
(22) Date of filing: 13.09.2023
(51) Int. Cl.: H04W 56/00, H04L 27/10, H04L 5/00, H04W 88/08, H04W 92/04, H04B 7/0413, H04L 7/02

(54) **PHASE OFFSET COMPENSATION DEVICE AND METHOD**

(30) Priority: 28.09.2022 KR 20220123336; 05.10.2022 KR 20220126882; 20.06.2023 KR 20230078827; 23.06.2023 KR 20230080789
(71) Applicant: Samsung Electronics Co., Ltd., Suwon-si, Gyeonggi-do 16677 (KR)
(72) Inventor: KIM, Daehoon, Suwon-si Gyeonggi-do 16677 (KR); OH, Jongho, Suwon-si Gyeonggi-do 16677 (KR); WANG, Jinsoo, Suwon-si Gyeonggi-do 16677 (KR)
(74) Representative: HGF
(86) International application number: PCT/KR2023/013699
(87) International publication number: WO 2024/071755

(57) **Abstract**

The present disclosure relates to a phase offset compensation device and method. The phase offset compensation method may comprise the steps of: confirming, by a distributed unit, whether phase offset compensation is required; generating, by the distributed unit, a message including information related to compensation of the phase offset, on the basis of the confirmation; and transmitting, by the distributed unit, the generated message to another unit connected to the distributed unit.

## Description

### Technical Field

The following embodiments relate to technology for compensating for a phase offset in an open radio access network (ORAN).

### Background Art

An open radio access network (ORAN) is an organization that defines and addresses the fronthaul interface standards between a distributed unit (DU) and a radio unit (RU) according to various function separation structures and provides standard interfaces in a 7-2x function separation structure to which Ethernet is applied.

An ORAN DU (O-DU) and an ORAN RU (O-RU) transmit and receive control information and IQ sample data using a control (C)-plane and a user (U)-plane.

The C-plane includes a transport layer and an application layer, and the application layer includes a section. Section types within the C-plane are determined based on the characteristics of the U-plane being transmitted or received. Among the section types, section type 3 may be used for a channel requiring a time or a frequency offset or for a different-than-nominal sub carrier spacing (SCS) channel.

There are various channels to which section type 3 may be applied, but a channel using section type 3 commonly experiences two types of phase offsets. One is a phase offset according to an upconversion technique, and the other is a phase offset occurring during frequency shift signal processing.

A channel subject to section type 3 includes PRACH, mixed-numerology, msgA-PUSCH, and the like, and compensation for both or some of the two types of phase offsets may be required depending on the channel. It is not necessary for an RU to compensate for the two types of phase offsets. Depending on a method of detecting a channel, phase offset compensation may not be required, and even when phase offset compensation is necessary, there is no obligation for the RU to perform compensation. However, when the RU is required to compensate for a phase offset, the RU requires information indicating that compensation is needed. However, under the existing ORAN specifications, the O-RU has no means of knowing what type of phase offset occurs in a signal being processed or whether phase offset compensation is required. In other words, information regarding phase offset does not exist in the ORAN specifications.

### DISCLOSURE OF THE INVENTION

### Technical Solutions

The present disclosure is to provide a device and method of compensating for a phase offset in an open radio access network (ORAN).

According to an embodiment, a phase offset compensation method in an ORAN may include operation 110 of verifying whether compensation for a phase offset is required in a distributed unit (DU) 600 or 700, operation 120 of generating a message including information related to the compensation for the phase offset based on the verification in the DU 600 or 700, and operation 130 of transmitting the generated message from the DU 600 or 700 to another unit connected to the DU.

According to an embodiment, a DU 600 may include a phase offset verifier 612 configured to verify whether compensation for a phase offset is required in an ORAN environment, a message generator 614 configured to generate a message including information related to the compensation for the phase offset based on the verification, and a transmission processor 616 configured to transmit the generated message to another unit connected to the DU.

According to an embodiment, the DU configured to compensate for a phase offset in the ORAN includes a communicator 710 and a processor 720, wherein the processor 720 may verify whether compensation for a phase offset is required in an ORAN environment, generate a message including information related to the compensation for the phase offset based on the verification, and transmit the generated message to another unit connected to the DU.

### BRIEF DESCRIPTION OF DRAWINGS

FIG. 1 is a flowchart illustrating an operation of providing information on whether phase offset compensation is required in a distributed unit (DU) of an open radio access network (ORAN), according to an embodiment.
FIGS. 2A and 2B are diagrams illustrating an example of indicating information related to phase offset compensation through a reserved region of a section extension field of a control (C)-plane message according to an embodiment and an example of indicating channel filter information utilizing numPrbc through a reserved region included in filterIndex IE of section type 3 of the C-plane message.
FIGS. 3A and 3B are diagrams illustrating an example of indicating information related to phase offset compensation through a reserved region within a section type 3 field of a C-plane message according to an embodiment and an example of indicating channel filter information utilizing numPrbc through a reserved region included in filterIndex IE of section type 3 of the C-plane message, according to an embodiment.
FIG. 4 is a diagram illustrating a format of filterIndex IE of section type 3 of a C-plane message, according to an embodiment.
FIG. 5A is a diagram illustrating an example of indicating information related to phase offset compensation through a reserved region included in filterIndex IE of section type 3 of a C-plane message, according to an embodiment.
FIGS. 5B and 5C are diagrams illustrating examples of indicating channel information, which is not included in the existing filterIndex IE but may utilize section type 3, through a reserved region included in filterIndex IE of section type 3 in a C-plane message, according to an embodiment.
FIG. 6 is a diagram illustrating an example of a DU in an ORAN providing information on whether phase offset compensation is required, according to an embodiment.
FIG. 7 is a diagram illustrating an example of a DU in an ORAN providing information on whether phase offset compensation is required, according to an embodiment.

### BEST MODE FOR CARRYING OUT THE INVENTION

Hereinafter, embodiments will be described in detail with reference to the accompanying drawings. However, various alterations and modifications may be made to the examples. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like constituent elements and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the embodiments. Each of these terms is not used to define an essence, order, or sequence of corresponding components, but used merely to distinguish the corresponding components from other components. It is to be understood that if a component is described as being "connected," "coupled" or "joined" to another component, the former may be directly "connected," "coupled," and "joined" to the latter or "connected", "coupled", and "joined" to the latter via another component.

The same name may be used to describe an element included in the embodiments described above and an element having a common function. Unless stated otherwise, the description of an embodiment may be applicable to other embodiments, and a repeated description related thereto is omitted.

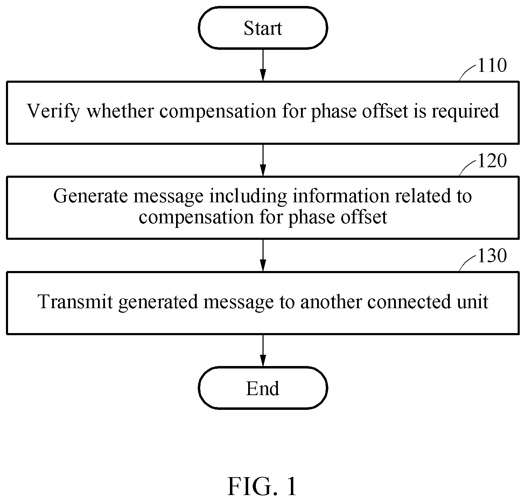

Hereinafter, a device and method of compensating for a phase offset in an open radio access network (ORAN) according to an embodiment are described with reference to FIGS. 1 to 7.

FIG. 1 is a flowchart illustrating an operation of providing information on whether phase offset compensation is required in a distributed unit (DU) of an ORAN, according to an embodiment.

Referring to FIG. 1, the DU of the ORAN may verify 110 whether phase offset compensation is required. In this case, the DU may also be a digital unit (DU).

In operation 110, the DU may verify whether compensation for an offset is required in a channel of section type 3.

In operation 110, the DU may verify whether compensation for a phase offset according to an upconversion technique is required and whether compensation for an offset occurring during frequency shift signal processing is required.

The DU according to an embodiment may generate 120 a message including information related to compensation for a phase offset based on the verification in operation 110. In this case, the information related to the compensation for a phase offset may be information indicating whether the compensation for a phase offset is required.

In operation 120, when the compensation for a phase offset according to the upconversion technique is required, the DU may indicate in the message, using a single bit 212 or 312, whether the compensation for a phase offset according to the upconversion technique is required.

In operation 120, when compensation for an offset occurring during frequency shift signal processing is required, the DU may indicate in the message, using a single bit 214 or 314 whether the compensation for the offset occurring during frequency shift signal processing is required.

More particularly, in operation 120, the DU may generate a message by allocating information related to compensation for a phase offset to a reserved region 210 of a section extension field 200 of a control (C)-plane message.

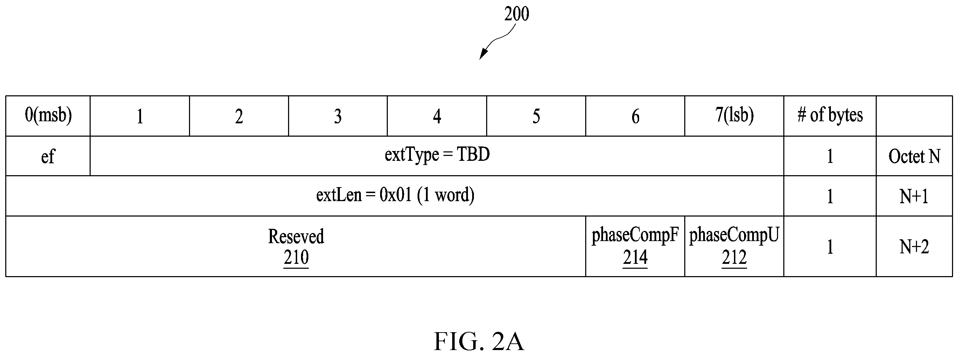

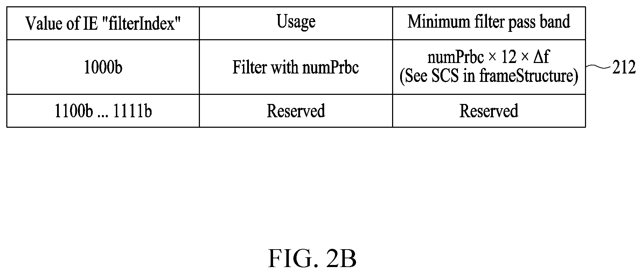

FIGS. 2A and 2B are diagrams illustrating an example of indicating information related to phase offset compensation through a reserved region of a section extension field of a C-plane message according to an embodiment and an example of indicating channel filter information utilizing numPrbc through a reserved region included in filterIndex IE of section type 3 of the C-plane message.

Referring to FIGS. 2A and 2B, a DU may represent, using a single bit, information (phaseCompU 212) indicating whether compensation for a phase offset according to an upconversion technique is required in the reserved region 210 of the section extension field 200 of the C-plane message and may represent, using a single bit, information (phaseCompF 214) indicating whether compensation for an offset occurring during frequency shift signal processing is required.

phaseCompU 212 may have a value of "1" or "0", and for example, a case in which the value of phaseCompU 212 is "1" may be information indicating that the compensation for a phase offset according to the upconversion technique is required, while a case in which the value of phaseCompU 212 is "0" may be information indicating that the compensation for a phase offset according to the upconversion technique is not required.

phaseCompF 214 may have a value of "1" or "0", and for example, a case in which the value of phaseCompF 214 is "1" may be information indicating that the compensation for a phase offset occurring during frequency shift signal processing is required, while a case in which the value of phaseCompF 214 is "0" may be information indicating that the compensation for a phase offset occurring during frequency shift signal processing is not required.

phaseCompU 212 is allocated to the 7th bit among the 0th to 7th bits in the reserved region 210, but embodiments are not limited thereto, and phaseCompU 212 may be allocated to any one of the 0th to 7th bits in the reserved region 210.

phaseCompF 214 is allocated to the th bit among the 0th to 7th bits in the reserved region 210, but embodiments are not limited thereto, and phaseCompF 214 may be allocated to any one of the 0th to 7th bits in the reserved region 210.

However, phaseCompU 212 and phaseCompF 214 are not allocated to the same bit among the 0th to 7th bits allocated in the reserved region 210.

The DU may indicate filter passband information based on numPrbc by adding a filter utilizing numPrbc to a reserved region 410 included in filterIndex IE 400 of section type 3 of a C-plane message.

For example, the filter information 212 utilizing numPrbc is allocated to a filter index value of 1000b among the values from 1000b to 1111b allocated in the reserved region 410, but embodiments are not limited thereto, and the filter information 212 may be allocated to any value from 1000b to 1111b in the reserved region 410.

Returning to the description of FIG. 1, in operation 120, the DU may generate the message by allocating the information related to the compensation for a phase offset to a reserved region 310 within a section type 3 field 300 of the C-plane message.

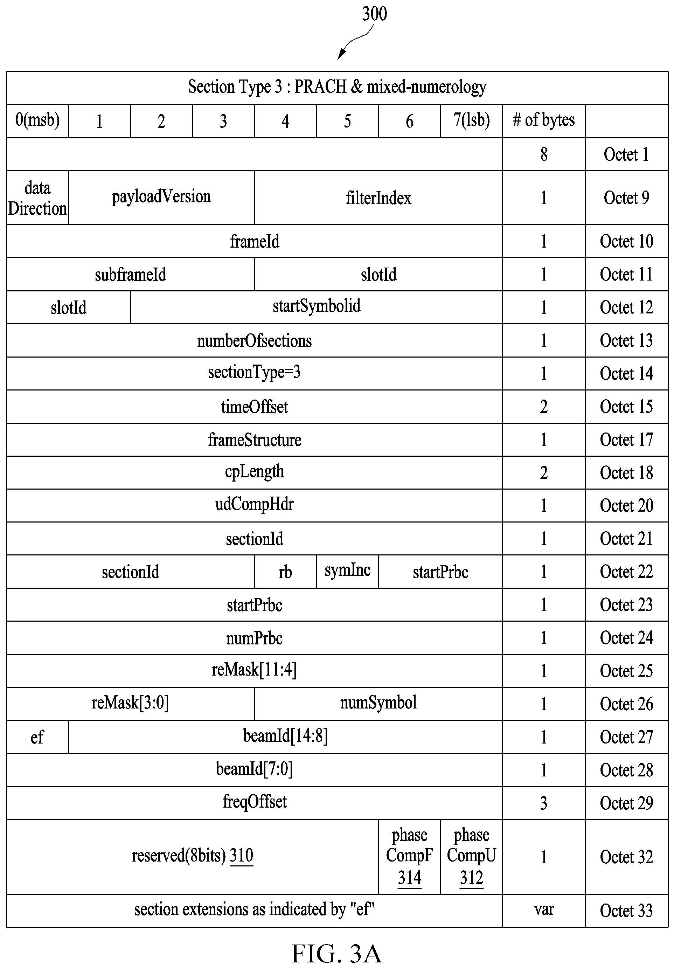

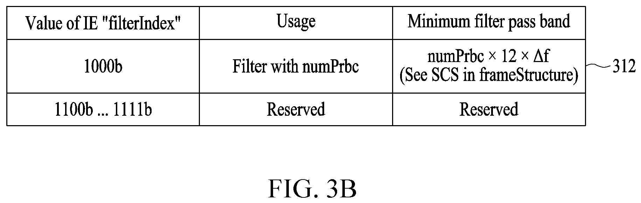

FIGS. 3A and 3B are diagrams illustrating an example of indicating information related to phase offset compensation through a reserved region within a section type 3 field of a C-plane message according to an embodiment and an example of indicating channel filter information utilizing numPrbc through a reserved region included in filterIndex IE of section type 3 of the C-plane message, according to an embodiment.

Referring to FIGS. 3A and 3B, a DU may represent, using a single bit, information (phaseCompU 312) indicating whether compensation for a phase offset according to an upconversion technique is required in the reserved region 310 within the section type 3 field 300 of the C-plane message and represent, using a single bit, information (phaseCompF 314) indicating whether compensation for an offset occurring during frequency shift signal processing is required.

phaseCompU 312 may have a value of "1" or "0", and for example, a case in which the value of phaseCompU 312 is "1" may be information indicating that the compensation for a phase offset according to the upconversion technique is required, and a case in which the value of phaseCompU 312 is "0" may be information indicating that the compensation for a phase offset according to the upconversion technique is not required.

phaseCompF 314 may have a value of "1" or "0", and for example, a case in which the value of phaseCompF 314 is "1" may be information indicating that the compensation for a phase offset occurring during frequency shift signal processing is required, and a case in which the value of phaseCompF 314 is "0" may be information indicating that the compensation for a phase offset occurring during frequency shift signal processing is not required.

phaseCompU 312 is allocated to the 7th bit among the 0th to 7th bits in the reserved region 310, but embodiments are not limited thereto, and phaseCompU 312 may be allocated to any one of the 0th to 7th bits in the reserved region 310.

phaseCompF 314 is allocated to the th bit of the bits among the 0th to 7th bits in the reserved region 310, but embodiments are not limited thereto, and phaseCompF may be allocated to any one of the 0th to 7th bits in the reserved region 310.

However, phaseCompU 312 and phaseCompF 314 are not allocated to the same bit among the 0th to 7th bits allocated in the reserved region 310.

The DU may indicate filter passband information based on numPrbc by adding a filter utilizing numPrbc to the reserved region 410 included in filterIndex IE 400 of section type 3 of the C-plane message.

For example, the filter information 312 utilizing numPrbc is allocated to a filter index value of 1000b among the values from 1000b to 1111b allocated in the reserved region 410, but embodiments are not limited thereto, and the filter information 312 may be allocated to any value from 1000b to 1111b in the reserved region 410.

Returning to the description of FIG. 1, in operation 120, the DU may generate the message by allocating the information related to the compensation for a phase offset to the reserved region 410 included in filterIndex IE 400 of section type 3 in the C-plane message.

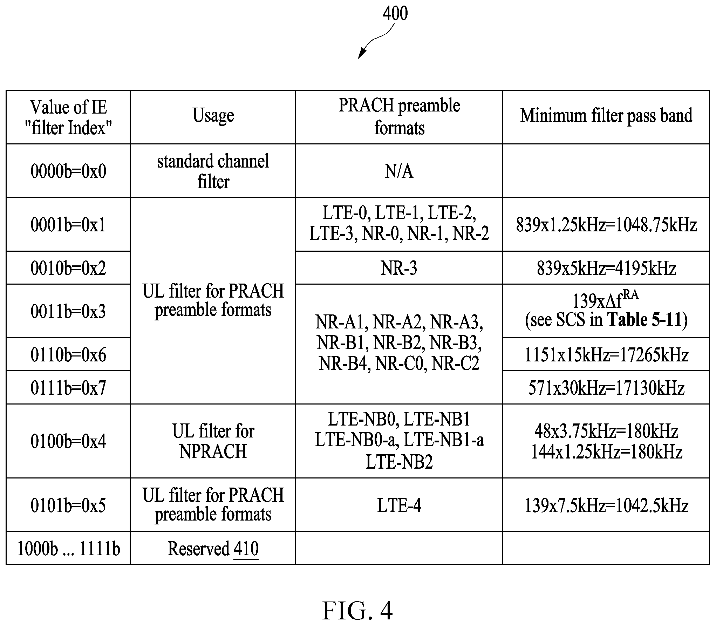

FIG. 4 is a diagram illustrating a format of filterIndex IE of section type 3 of a C-plane message, according to an embodiment.

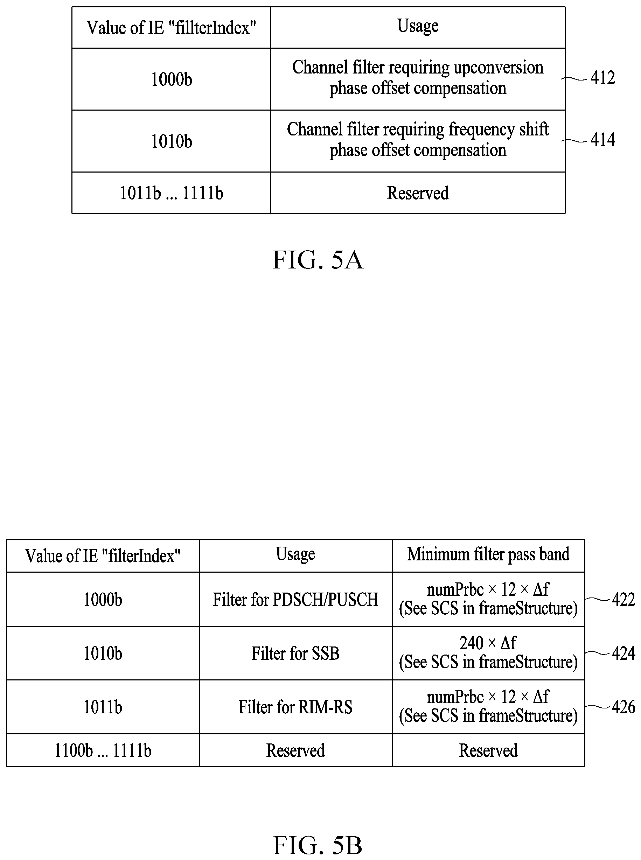

FIG. 5A is a diagram illustrating an example of indicating information related to phase offset compensation through a reserved region included in filterIndex IE of section type 3 of a C-plane message, according to an embodiment.

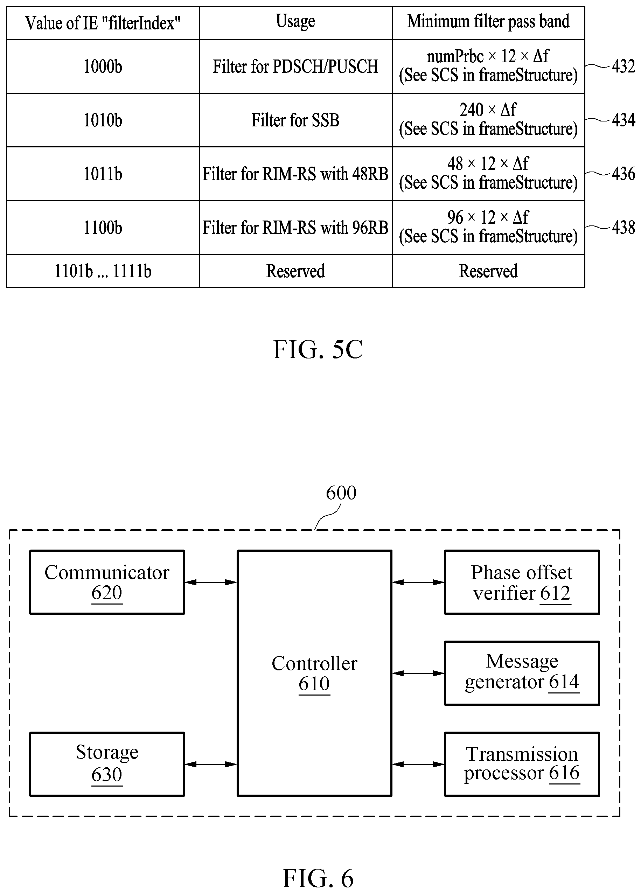

FIGS. 5B and 5C are diagrams illustrating examples of indicating channel information, which is not included in the existing filterIndex IE but may utilize section type 3, through a reserved region included in filterIndex IE of section type 3 in a C-plane message, according to an embodiment.

Referring to FIGS. 4 and 5A, a DU may represent, as a preset filter index value, information 412 indicating whether compensation for a phase offset according to the upconversion technique is required in the reserved region 410 included in filterIndex IE 400 of section type 3 in the C-plane message and represent, as a preset filter index value, information 414 indicating whether compensation for an offset occurring during frequency shift signal processing is required.

For example, the information 412 indicating whether the compensation for a phase offset according to the upconversion technique is required is allocated to a filter index value of 1000b among the values from 1000b to 1111b allocated in the reserved region 410, but embodiments are not limited thereto, and the information 412 may be allocated to any value from 1000b to 1111b in the reserved region 410.

In addition, the information 414 indicating whether the compensation for an offset occurring during frequency shift signal processing is required is allocated to a filter index value of 1010b among the values from 1000b to 1111b allocated in the reserved region 410, but embodiments are not limited thereto, and the information 414 may be allocated to any value from 1000b to 1111b in the reserved region 410.

However, the information 412 and the information 414 are not allocated to the same value among the values from 1000b to 1111b allocated in the reserved region 410.

Referring to FIGS. 4 and 5B, the DU may add channels that are not included in the existing filter index element but may utilize section type 3 to the reserved region 410 included in filterIndex IE 400 of section type 3 in the C-plane message.

For example, filter information 422 for physical downlink shared channel/physical uplink shared channel (PDSCH/PUSCH) is allocated to a filter index value of 1000b among the values from 1000b to 1111b allocated in the reserved region 410, but embodiments are not limited thereto, and the filter information 422 may be allocated to any value from 1000b to 1111b in the reserved region 410.

In addition, filter information 424 for a synchronization signal block (SSB) channel is allocated to a filter index value of 1010b among the values from 1000b to 1111b allocated in the reserved region 410, but embodiments are not limited thereto, and the filter information 424 may be allocated to any value from 1000b to 1111b in the reserved region 410.

In addition, filter information 426 for a remote interference management reference signal (RIM-RS) channel is allocated to a filter index value of 1011b among the values from 1000b to 1111b allocated in the reserved region 410, but embodiments are not limited thereto, and the filter information 426 may be allocated to any value from 1000b to 1111b in the reserved region 410.

In addition, filter information for other channels that may utilize section type 3 may be allocated to any value from 1000b to 1111b allocated in the reserved region 410.

However, the information 422, the information 424, and the information 426 are not allocated to the same value among the values from 1000b to 1111b allocated in the reserved region 410.

Referring to FIGS. 4 and 5C, the DU may add channels that are not included in the existing filter index element but may utilize section type 3 to the reserved region 410 included in filterIndex IE 400 of section type 3 of the C-plane message.

For example, filter information 432 for the PDSCH/PUSCH channels is allocated to a filter index value of 1000b among the values from 1000b to 1111b allocated in the reserved region 410, but embodiments are not limited thereto, and the filter information 432 may be allocated to any value from 1000b to 1111b in the reserved region 410.

Additionally, filter information 434 for the SSB channel is allocated to a filter index value of 1010b among the values from 1000b to 1111b allocated in the reserved region 410, but embodiments are not limited thereto, and the filter information 434 may be allocated to any value from 1000b to 1111b in the reserved region 410.

Additionally, filter information 436 for a 48RB RIM-RS channel is allocated to a filter index value of 1011b among the values from 1000b to 1111b allocated in the reserved region 410, but embodiments are not limited thereto, and the filter information 436 may be allocated to any value from 1000b to 1111b in the reserved region 410.

Additionally, filter information 438 for a 96RB RIM-RS channel is allocated to a filter index value of 1100b among the values from 1000b to 1111b allocated in the reserved region 410, but embodiments are not limited thereto, and the filter information 438 may be allocated to any value from 1000b to 1111b in the reserved region 410.

Additionally, filter information for other channels that may utilize section type 3 may be allocated to any value from 1000b to 1111b allocated in the reserved region 410.

However, the information 432, the information 434, the information 436, and the information 438 are not allocated to the same value among the values from 1000b to 1111b allocated in the reserved region 410.

Returning to the description of FIG. 1, the DU may transmit 130 the generated message to another unit connected to the DU. In this case, the other unit may be a radio unit (RU) or a massive multiple input multiple output (MIMO) unit (MMU).

The other unit that receives the message including information related to the compensation for a phase offset may perform the compensation for the phase offset by referring to the information related to the compensation for the phase offset.

FIG. 6 is a diagram illustrating an example of a DU in an ORAN providing information on whether phase offset compensation is required, according to an embodiment.

Referring to FIG. 6, a DU 600 of an ORAN may be configured to include a controller 610, a communicator 620, and a storage 630. The controller 610 may include a phase offset verifier 612, a message generator 614, and a transmission processor 616.

The communicator 620 is a communication interface device that includes a receiver and a transmitter and may communicate with another unit connected to the communicator 620. In this case, the other unit connected to the communicator 620 may be an RU or an MMU.

The storage 630 may store an operating system (OS), an application, and a program for processing the operations of the present disclosure to control the overall operation of the DU 600. The storage 630 may be a storage device, such as a flash memory, a hard disk drive, or the like.

The phase offset verifier 612 may verify whether compensation for a phase offset is required in an ORAN environment. In this case, the phase offset verifier 612 may verify whether compensation for an offset is required in a channel of section type 3.

The phase offset verifier 612 may verify whether compensation for the phase offset according to an upconversion technique in the channel of section type 3 is required and whether compensation for an offset occurring during frequency shift signal processing is required.

The message generator 614 may generate a message including information related to the compensation for the phase offset, based on the verification performed by the phase offset verifier 612. In this case, the information related to the compensation for the phase offset is information indicating whether the compensation for the phase offset is required.

The message generator 614 may indicate in the message, using a single bit 212 or 312, whether the compensation for the phase offset according to the upconversion technique is required.

The message generator 614 may indicate in the message, using a single bit 214 or 314, whether the compensation for the offset occurring during frequency shift signal processing is required.

The message generator 614 may generate the message by allocating the information related to the compensation for the phase offset to at least one of the reserved region 210 in the section extension field 200 of a C-plane message, the reserved region 310 in the section type 3 field 300 of the C-plane message, and the reserved region 410 included in filterIndex IE 400 of section type 3 of the C-plane message.

The transmission processor 616 may transmit the message generated by the message generator 614 to another unit connected to the DU.

The controller 610 may control the overall operation of the DU 600. Additionally, the controller 610 may perform the functions of the phase offset verifier 612, the message generator 614, and the transmission processor 616. The separation of the controller 610, the phase offset verifier 612, the message generator 614, and the transmission processor 616 in the diagram is for the purpose of distinguishing and describing respective functions. Therefore, the controller 610 may include at least one processor configured to perform the respective functions of the phase offset verifier 612, the message generator 614, and the transmission processor 616. Furthermore, the controller 610 may include at least one processor configured to perform some of the respective functions of the phase offset verifier 612, the message generator 614, and the transmission processor 616.

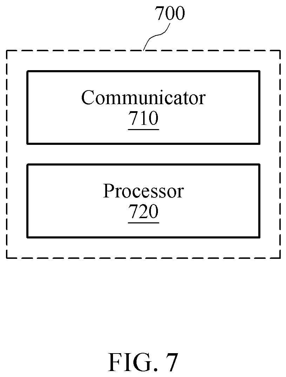

FIG. 7 is a diagram illustrating an example of a DU in an ORAN providing information on whether phase offset compensation is required, according to an embodiment.

Referring to FIG. 7, a DU 700 of an ORAN may include a communicator 710 and a processor 720.

The communicator 620 is a communication interface device that includes a receiver and a transmitter and may communicate with another unit connected to the communicator 620. In this case, the other unit connected to the communicator 620 may be an RU or an MMU.

The processor 720 may verify whether compensation for a phase offset is required in an ORAN environment and may generate a message including information related to the compensation for the phase offset and transmit the generated message to another unit connected to the DU based on the verification.

The information related to the compensation for the phase offset, according to an embodiment, may be information indicating whether the compensation for the phase offset is required.

The processor 720, according to an embodiment, may verify whether compensation for the phase offset according to an upconversion technique in a channel of section type 3 is required and whether compensation for an offset occurring during frequency shift signal processing is required.

The processor 720, according to an embodiment, may indicate in the message, using a single bit 212 or 312, whether the compensation for the phase offset according to the upconversion technique is required and indicate in the message, using a single bit 214 or 314, whether the compensation for the offset occurring during frequency shift signal processing is required.

The processor 720 according to an embodiment may generate the message by allocating the information related to the compensation for the phase offset to at least one of the reserved region 210 in the section extension field 200 of the C-plane message, the reserved region 310 in the section type 3 field 300 of the C-plane message, and the reserved region 410 included in filterIndex IE 400 of section type 3 of the C-plane message.

According to an embodiment, a phase offset compensation method in an ORAN may include operation 110 of verifying, in a DU 600 or 700, whether compensation for a phase offset is required, operation 120 of generating a message including information related to the compensation for the phase offset based on the verification in the DU 600 or 700, and operation 130 of transmitting the generated message from the DU 600 or 700 to another unit connected to the DU.

In this case, the information related to the compensation for the phase offset may be information indicating whether the compensation for the phase offset is required.

According to an embodiment, operation 110 of verifying whether the compensation for the phase offset is required may include verifying, in the DU 600 or 700, whether the compensation for the offset is required in a channel of section type 3.

According to an embodiment, operation 110 of verifying whether the compensation for the phase offset is required may include verifying whether the compensation for the phase offset according to an upconversion technique is required and whether the compensation for the offset occurring during frequency shift signal processing is required.

According to an embodiment, operation 120 of generating the message including the information related to the compensation for the phase offset based on the verification may include, when the compensation for the phase offset according to the upconversion technique is required, indicating in the message, using a single bit 212 or 312, whether the compensation for the phase offset is required.

According to an embodiment, operation 120 of generating the message including the information related to the compensation for the phase offset based on the verification may include, when the compensation for the offset occurring during frequency shift signal processing is required, indicating in the message, using a single bit 214 or 314, whether the compensation for the offset occurring during the frequency shift signal processing is required.

According to an embodiment, operation 120 of generating the message including the information related to the compensation for the phase offset based on the verification may include indicating in the message, using a single bit 212 or 312, whether the compensation for the phase offset according to the upconversion technique is required and indicating in the message, using a single bit 214 or 314, whether the compensation for the offset occurring during frequency shift signal processing is required.

According to an embodiment, operation 120 of generating the message including the information related to the compensation for the phase offset based on the verification may include generating the message by allocating the information related to the compensation for the phase offset to the reserved region 210 of the section extension field 200 in the C-plane message.

According to an embodiment, operation 120 of generating the message including the information related to the compensation for the phase offset based on the verification may include generating the message by allocating the information related to the compensation for the phase offset to the reserved region 310 within the section type 3 field 300 of the C-plane message.

According to an embodiment, operation 120 of generating the message including the information related to the compensation for the phase offset based on the verification may include generating the message by allocating the information related to the compensation for the phase offset to the reserved region 410 included in filterIndex IE 400 of section type 3 of the C-plane message.

According to an embodiment, the DU 600 may include the phase offset verifier 612 configured to verify whether compensation for a phase offset is required in an ORAN environment, the message generator 614 configured to generate a message including information related to the compensation for the phase offset based on the verification, and the transmission processor 616 configured to transmit the generated message to another unit connected to the DU.

According to an embodiment, the information related to the compensation for the phase offset may be information indicating whether the compensation for the phase offset is required.

According to an embodiment, the phase offset verifier 612 may verify whether the compensation for the phase offset according to the upconversion technique is required in a channel of section type 3 and whether compensation for an offset occurring during frequency shift signal processing is required.

According to an embodiment, the message generator 614 may indicate in the message, using a single bit 212 or 312, whether the compensation for the phase offset according to the upconversion technique is required and indicate in the message, using a single bit 214 or 314, whether the compensation for the offset occurring during frequency shift signal processing is required.

According to an embodiment, the message generator 614 may generate the message by allocating the information related to the compensation for the phase offset to at least one of the reserved region 210 in the section extension field 200 of the C-plane message, the reserved region 310 in the section type 3 field 300 of the C-plane message, and the reserved region 410 included in filterIndex IE 400 of section type 3 in the C-plane message.

According to an embodiment, a DU in an ORAN that compensates for a phase offset may include the communicator 710 and the processor 720, wherein the processor 720 may verify whether compensation for a phase offset is required in an ORAN environment, generate a message including information related to the compensation for the phase offset based on the verification, and transmit the generated message to another unit connected to the DU.

According to an embodiment, the information related to the compensation for the phase offset may be information indicating whether the compensation for the phase offset is required.

According to an embodiment, the processor 720 may verify whether the compensation for the phase offset according to an upconversion technique in a channel of section type 3 is required and whether compensation for an offset occurring during frequency shift signal processing is required.

According to an embodiment, the processor 720 may indicate in the message, using a single bit 212 or 312, whether the compensation for the phase offset according to the upconversion technique is required and indicate in the message, using a single bit 214 or 314, whether the compensation for the offset occurring during frequency shift signal processing is required.

According to an embodiment, the processor 720 may generate the message by allocating the information related to the compensation for the phase offset to at least one of the reserved region 210 in the section extension field 200 of the C-plane message, the reserved region 310 in the section type 3 field 300 of the C-plane message, and the reserved region **410** included in filterIndex IE 400 of section type 3 of the C-plane message.

The methods according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc read only memory (CD-ROM) discs or digital versatile/video discs (DVDs); magnetooptical media such as floptical disks; and hardware devices that are specially configured to store and perform program instructions, such as ROM, random-access memory (RAM), flash memory, and the like. Examples of program instructions include both machine code, such as produced by a compiler, and files containing higher-level code that may be executed by the computer using an interpreter. The above-described hardware devices may be configured to act as one or more software modules in order to perform the operations of the embodiments, or vice versa.

Software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software may also be distributed over network-coupled computer systems so that the software is stored and executed in a distributed fashion. The software and data may be stored by one or more non-transitory computer-readable recording mediums.

Although the embodiments have been described with reference to the limited drawings, one of ordinary skill in the art may apply various technical modifications and variations based thereon. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and equivalents to the claims are also within the scope of the following claims.

## Claims

1. A phase offset compensation method in an open radio access network (ORAN), the phase offset compensation method comprising:
verifying (110) whether compensation for a phase offset is required in a distributed unit (DU) (600; 700);
generating (120) a message comprising information related to the compensation for the phase offset based on the verification in the DU (600; 700); and
transmitting (130) the generated message from the DU (600; 700) to another unit connected to the DU.

2. The phase offset compensation method of claim 1, wherein the information related to the compensation for the phase offset is information indicating whether the compensation for the phase offset is required.

3. The phase offset compensation method of one of claims 1 and 2, wherein the verifying (110) of whether the compensation for the phase offset is required comprises verifying whether compensation for an offset in a channel of section type 3 in the DU (600; 700) is required.

4. The phase offset compensation method of one of claims 1 to 3, wherein the verifying (110) of whether the compensation for the phase offset comprises verifying whether compensation for a phase offset according to an upconversion technique is required and whether compensation for an offset occurring during frequency shift signal processing is required.

5. The phase offset compensation method of one of claims 1 to **4,** wherein the generating (120) of the message comprising the information related to the compensation for the phase offset based on the verification comprises, when compensation for a phase offset according to an upconversion technique is required, indicating in the message, using a single bit (212, 312), whether the compensation for the phase offset according to the upconversion technique is required.

6. The phase offset compensation method of one of claims 1 to 5, the generating (120) of the message comprising the information related to the compensation for the phase offset based on the verification comprises, when compensation for an offset occurring during frequency shift signal processing is required, indicating in the message, using a single bit (214, 314), whether the compensation for the offset occurring during frequency shift signal processing is required.

7. The phase offset compensation method of one of claims 1 to 6, wherein the generating (120) of the message comprising the information related to the compensation for the phase offset based on the verification comprises:
indicating in the message, using a bit (212, 312), whether compensation for a phase offset according to an upconversion technique is required; and
indicating in the message, using a single bit (214, 314), whether compensation for an offset occurring during frequency shift signal processing is required.

8. The phase offset compensation method of one of claims 1 to 7, wherein the generating (120) of the message comprising the information related to the compensation for the phase offset based on the verification comprises generating the message by allocating the information related to the compensation for the phase offset to a reserved region (210) of a section extension field (200) of a control (C)-plane message.

9. The phase offset compensation method of one of claims 1 to 8, wherein the generating (120) of the message comprising the information related to the compensation for the phase offset based on the verification comprises generating the message by allocating the information related to the compensation for the phase offset to a reserved region (310) in a section type 3 field (300) of a C-plane message.

10. The phase offset compensation method of one of claims 1 to 9, wherein the generating (120) of the message comprising the information related to the compensation for the phase offset based on the verification comprises generating the message by allocating the information related to the compensation for the phase offset to a reserved region 410 comprised in filterIndex IE (400) of section type 3 of a C-plane message.

11. A distributed unit (DU) (600) comprising:
a phase offset verifier (612) configured to verify whether compensation for a phase offset is required in an open radio access network (ORAN) environment;
a message generator (614) configured to generate a message comprising information related to the compensation for the phase offset based on the verification; and
a transmission processor (616) configured to transmit the generated message to another unit connected to the DU.

12. The DU (600) of claim 11, wherein the information related to the compensation for the phase offset is information indicating whether the compensation for the phase offset is required.

13. The DU (600) of one of claims 11 and 12, wherein the phase offset verifier (612) is configured to verify whether compensation for a phase offset according to an upconversion technique in a channel of section type 3 is required and whether compensation for an offset occurring during frequency shift signal processing is required.

14. The DU (600) of one of claims 11 to 13, wherein the message generator (614) is configured to:
indicate in the message, using a single bit (212, 312), whether compensation for a phase offset according to an upconversion technique is required; and
indicate in the message, using a single bit (214, 314), whether compensation for an offset occurring during frequency shift signal processing is required.

15. The DU (600) of one of claims 11 to 14, wherein the message generator (614) is configured to generate a message by allocating the information related to the compensation for the phase offset to at least one of a reserved region (210) of a section extension field (200) of a control (C)-plane message,
a reserved region (310) in a section type 3 field (300) of a C-plane message, and
a reserved region (410) comprised in filterIndex IE (400) of section type 3 of a C-plane message.
